# EUROPEAN PATENT APPLICATION

(11) **EP 1 871 056 A1**
(43) Date of publication of application: **26.12.2007**
(21) Application number: 07011989.6
(22) Date of filing: 19.06.2007
(51) Int. Cl.: H04L 12/56

(54) **Method and apparatus for data framing in a wireless communications system**

(30) Priority: 19.06.2006 US 805097 P
(71) Applicant: Innovative Sonic Limited, Tortola (VG)
(72) Inventor: Jiang, Sam Shiaw-Shiang, Taipei City (TW)
(74) Representative: Hager, Thomas Johannes

(57) **Abstract**

To reduce overhead in a radio link control protocol data unit header, when a plurality of package data convergence protocol protocol data units, hereafter PDCP PDUs, are multiplexed into a radio link control protocol data unit, hereafter RLC PDU, a first package data convergence protocol sequence number, hereafter PDCP SN, of a first PDCP PDU of the plurality of PDCP PDUs is used (302), and all PDCP SNs of the plurality of PDCP PDUs other than the first PDCP SN are removed from the RLC PDU (304).

## Description

This application claims the benefit of the filing date of U.S. Provisional Patent Application No. 60/805, 097, filed on June 19, 2006, the contents of which are hereby incorporated by reference.

The present invention relates to a method for performing data framing and related communications device according to the pre-characterizing clause of claims 1 and 3.

In acknowledged mode, hereafter AM, a radio link control, hereafter RLC, entity is split into a transmitting side and a receiving side. The transmitting side receives RLC service data units, hereafter SDUs, from upper layers through an AM service access point, hereafter AM-SAP. The RLC SDUs are concatenated or segmented to AMD protocol data units, hereafter PDUs, of a predetermined length. Then, the AMD PDUs are placed in a retransmission buffer and a MUX. The MUX multiplexes AMD PDUs from the retransmission buffer and AMD PDUs that are newly segmented/concatenated. A function then completes a header on the AMD PDUs. Then, the transmission side of the RLC entity sends the AMD PDUs to a lower layer, e.g. a medium access control, hereafter MAC, layer, through a logical channel.

In a long-term evolution, hereafter LTE, a packet data convergence protocol, hereafter PDCP, entity, which is an upper layer of RLC entity, must provide a PDCP sequence number, hereafter SN, for each packet, i.e. for each RLC SDU, to facilitate ciphering functionality. The RLC entity can use the PDCP SN to perform reordering, duplication detection, flow control, and automatic repeat request, hereafter ARQ. When multiple PDCP PDUs, i.e. RLC SDUs, are multiplexed or concatenated into one RLC PDU as described above, the original PDCP PDUs are fully included in the RLC PDU, i.e. contents of the original PDCP PDUs are not touched during multiplexing or concatenation. This straightforward framing method increases the length of the RLC PDU to be transmitted on radio.

This in mind, the present invention aims at providing a method for performing data framing and related communications device that reduces header overhead in RLC PDUs.

This is achieved by a method for performing data framing and related communications device according to claims 1 and 3. The dependent claims pertain to corresponding further developments and improvements.

As will be seen more clearly from the detailed description following below, the claimed method for performing data framing and related communications device includes removing all PDCP SNs of a plurality of PDCP PDUs other than a first PDCP SN from an RLC PDU.

In the following, the invention is further illustrated by way of example, taking reference to the accompanying drawings. Thereof
Fig. 1 is a function block diagram of a wireless communications device,
Fig. 2 is a diagram of program code of Fig. 1, and
Fig. 3 is a flowchart of a process according to the present invention.

3GPP radio-access technology is poised for continued competitiveness in years to come with such enhancements as high-speed downlink protocol access, hereafter HSDPA, and Enhanced Uplink. In the long term, competitiveness is assured through the LTE of the 3GPP radio-access technology. According to 3GPP TR 25.813 V1.0.1 (2006-06), "Evolved Universal Terrestrial Radio Access (E-UTRA) and Evolved Universal Terrestrial Radio Access Network (E-UTRAN) Radio Interface Protocol Aspects," hereafter "3GPP TR 25.81 3," the LTE includes important advances such as, "reduced latency, higher user data rates, optimised support for packet services, improved system capacity and coverage, and reduced cost for the operator, while also reducing system complexity."

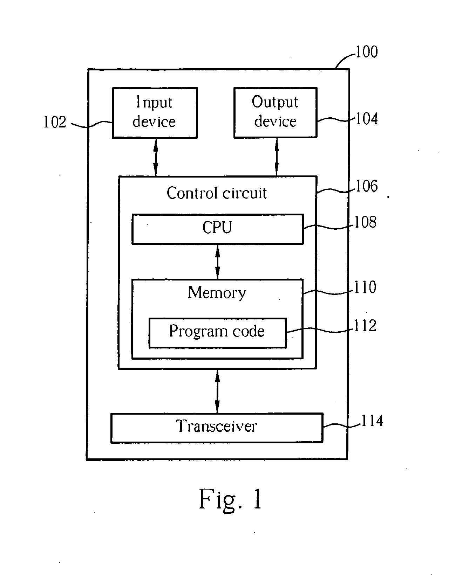

Please refer to Fig. 1, which is a function block diagram of a communications device 100. For the sake of brevity, Fig. 1 only shows an input device 102, an output device 104, a control circuit 106, a central processing unit, hereafter CPU, 108, a memory 110, a program code 112, and a transceiver 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3. Preferably, the communications device 100 is utilized in a 3G mobile communications system.

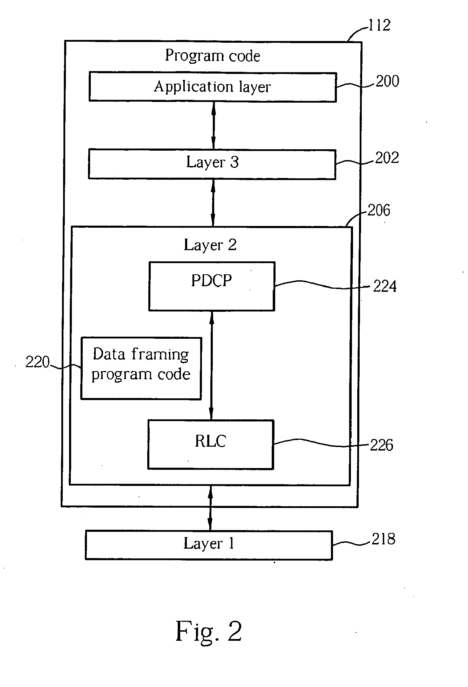

Please continue to refer to Fig. 2. Fig. 2 is a diagram of the program code 112 shown in Fig. 1. The program code 112 includes an application layer 200, a Layer 3 202, and a Layer 2 206,'and is coupled to a Layer 1 218. The Layer 2 206 comprises two sub-layers: a radio link control, hereafter RLC, entity 226 and a packet data convergence protocol, hereafter PDCP, entity 224. The PDCP entity 224 is an upper layer to the RLC entity 226. Primary functions of the RLC entity 226 include providing segmentation, reassembly, concatenation, padding, retransmission, sequence check, and duplication detection on transmitted data or control instructions based on different transmission quality requirements. The PDCP entity 224 is primarily responsible for compression/decompression of headers, ciphering, transfer of user data, and maintenance of PDCP sequence numbers.

In LTE, the PDCP entity 224 must provide a PDCP SN for each packet, i.e. for each RLC SDU, to facilitate ciphering functionality. The RLC entity 226 can use the PDCP SNs when performing reordering, duplication detection, flow control, and ARQ functionalities. To decrease overhead, the program code 112 comprises a data framing program code 220.

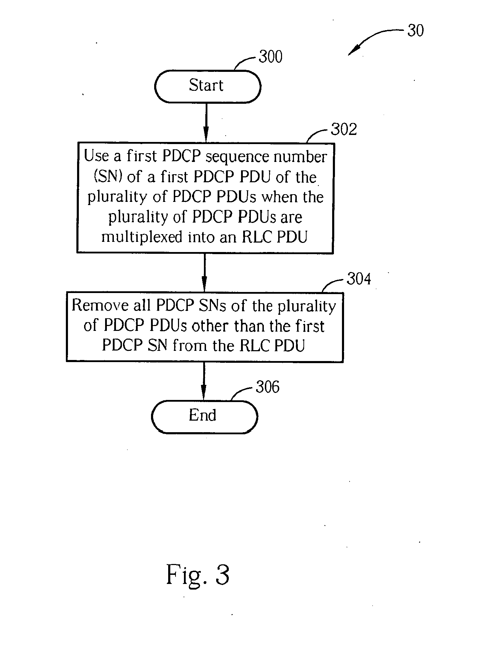

Please refer to Fig. 3, which is a flowchart of a process 30 according to an embodiment of the present invention. The process 30 is utilized for data framing in the wireless communications system, and can be complied into the data framing program code 220. The process 30 comprises the following steps:
Step 300: Start.
Step 302: Use a first PDCP sequence number, hereafter SN, of a first
PDCP PDU of the plurality of PDCP PDUs when the plurality of PDCP PDUs are multiplexed into an RLC PDU.
Step 304: Remove all PDCP SNs of the plurality of PDCP PDUs other than the first PDCP SN from the RLC PDU.
Step 306: End.

According to the process 30, when the plurality of PDCP PDUs are multiplexed into the RLC PDU, only one PDCP SN of the plurality of the first PDCP PDU of the PDCP PDUs that are multiplexed is needed. The other PDCP SNs are removed from the said RLC PDU. They can be rebuilt by the peer RLC entity of the peer receiver. The PDCP SN of the first PDCP PDU of the PDCP PDUs that are multiplexed into one RLC PDU can be included in the RLC PDU. It should be noted that the first PDCP PDU is not necessarily a PDCP PDU received first, multiplexed first, or concatenated first. Any PDCP PDU in the plurality of PDCP PDUs could serve as the first PDCP PDU. Preferably, the PDCP PDU that is multiplexed first serves as the first PDCP PDU.

In summary, by removing other PDCP SNs from an RLC PDU when multiplexing the PDCP PDUs to form the RLC PDU, the present invention can reduce the overhead of the RLC PDU header and conserve wireless resources.

## Claims

1. A method of performing data framing in a wireless communications system when a plurality of package data convergence protocol,
hereafter PDCP, protocol data units, hereafter PDU, are multiplexed into a radio link control, hereafter RLC, PDU, the method comprising:
using a first PDCP sequence number, hereafter SN, of a first PDCP PDU of the plurality of PDCP PDUs (302); and
**characterized by**:
removing all PDCP SNs of the plurality of PDCP PDUs other than the first PDCP SN from the RLC PDU (304).

2. The method of claim 1, **characterized in that** the PDCP SN of the first PDCP PDU of the plurality of PDCP PDUs is included in the RLC PDU.

3. A communications device (100) utilized in a wireless communications system for performing data framing when a plurality of package data convergence protocol, hereafter PDCP, protocol data units, hereafter PDU, are multiplexed into a radio link control, hereafter RLC, PDU, the communications device comprising:
a control circuit (106) for realizing functions of the communications device;
a central processing unit (108) installed in the control circuit for executing program codes to operate the control circuit; and
a memory (110) coupled to the central processing unit and comprising:
program code executed for using a first PDCP sequence number,
hereafter SN, of a first PDCP PDU of the plurality of PDCP PDUs (302); and
**characterized in that** the memory (110) further comprises:
program code executed for removing all PDCP SNs of the plurality of PDCP PDUs other than the first PDCP SN from the RLC PDU (304).

4. The communications device of claim 3, **characterized in that** the PDCP SN of the first PDCP PDU of the plurality of PDCP PDUs is included in the RLC PDU.
